# EUROPÄISCHE PATENTSCHRIFT

(11) **EP 0 447 773 B1**
(45) Veröffentlichungstag und Bekanntmachung des Hinweises auf die Patenterteilung: **04.05.1994**
(21) Anmeldenummer: 91101422.3
(22) Anmeldetag: 04.02.1991
(51) Int. Cl.: A22C 21/00

(54) **Verfahren zum Filetieren von Geflügelkörpern**
Poultry filleting method
Procédé pour lever les filets de volailles

(30) Priorität: 19.03.1990 DE 4008719
(43) Veröffentlichungstag der Anmeldung: 25.09.1991
(73) Patentinhaber: NORDISCHER MASCHINENBAU RUD. BAADER GMBH + CO KG, 23560 Lübeck (DE)
(72) Erfinder: Diesing, Karl-Heinz, W-2400 Lübeck (DE); Groth, Peter, W-2418 Ratzeburg (DE); Wagner, Wolfgang, W-2067 Reinfeld (DE)

(56) Entgegenhaltungen:
- EP-A- 0 168 865
- EP-A- 0 203 015
- EP-A- 0 207 553
- EP-A- 0 313 824
- EP-A- 0 336 162
- EP-A- 0 380 714
- DE-C- 3 444 430
- US-A- 4 557 017

## Beschreibung

Die Erfindung betrifft ein Verfahren zum maschinellen Ablösen des Fleisches von den Körpern geschlachteten Geflügels in Filetform, wobei das entsprechend zu handhabende Ausgangsprodukt einen als "front-half" bezeichneten, d. h. einen durch einen schräg durch den Körper verlaufenden, das Becken mit den Beinen abtrennenden Querschnitt entstandenen Körperteil umfaßt, von dem jedoch die Flügel entfernt sind, der also im wesentlichen den Brustkorb (thorax), den entsprechenden Teil der Wirbelsäule (columna vertebralis), die Rippen (costae), das aus dem Brustbeinkamm (crista sterni) und der Brustbeinplatte (corpus sterni) bestehende Brustbein (sternum), die von diesem getragenen Rabenbeine (coracoidae) mit den Flügelgelenken und dem Gabelbein (clavicula), sowie die Schulterblätter (scapulae) umfaßt, und wobei dieser Körperteil unter Aufstülpen mit den Flügelgelenken voraus und parallel zu seiner Symmetrieebene gefördert wird. Ein derartiges Verfahren ist aus der EP-A-0 336 162 bekannt.

Bei einer derartigen Bearbeitung von Geflügelkörpern kommt es insbesondere aus Gründen der Wirtschaftlichkeit darauf an, die Ausbeute an hochwertigem Filetfleisch zu maximieren, d. h. die auf der Karkasse verbleibende Restfleischmenge so gering wie eben möglich zu halten. Gleichzeitig wird seitens des Verbrauchers Wert darauf gelegt, daß das gewonnene Fleischstück ein gefälliges Erscheinungsbild hat, was im wesentlichen von der Glattheit der Trennflächen abhängig ist.

Es ist die Aufgabe der vorliegenden Erfindung, diese Ziele auf optimale Weise zu verwirklichen.

Diese Aufgabe wird erfindungsgemäß durch Anwendung eines Verfahrens gelöst, daß gekennzeichnet ist durch die Verfahrensschrittfolge: Ablösen der den Rückenbereich überspannenden Haut von dem dort befindlichen Rückenfleisch und Auftrennen derselben im Bereich über der Wirbelsäule, Lösen des Fleisches von dem Gabelbein durch Schaben längs der Außenkontur desselben, Lösen der im Rückenbereich auf den Rippen aufliegenden Fleischteile von den dort befindlichen Teilen der Rippen und den Schulterblättern, Ablösen der auf dem vorauslaufenden Teil des Flügelgelenkes aufliegenden Fleischteile unter Lösen der nach dem Abschneiden der Flügel in dem Filetfleisch verbleibenen Reste der Flügelsehnen von den Flügelgelenken, Lösen der auf den Rabenbeinen den übrigen Teilen der Rippen und der Brustbeinplatte aufliegenden Fleischteile von diesen Skeletteilen, und schließlich Abreißen der Filets von dem Kamm des Brustbeins.

Die mit diesem Verfahren erzielbaren Vorteile bestehen insbesondere darin, daß die Ausgestaltung der Bearbeitungswerkzeuge dank der jeweils zu berücksichtigenden begrenzten Arbeitsfelder kompromißlos, d. h. optimal auf die jeweiligen, insbesondere anatomisch bedingt in den jeweiligen Arbeitsfeldern vorliegenden Gegebenheiten ausgerichtet werden kann.

Damit ist eine präzise Gestaltung und Steuerung der Bearbeitungswerkzeuge verwirklichbar mit dem Effekt einer hohen Ausbeute an Filetfleisch mit relativ glatten Trennflächen.

Vorteilhafte weitere Modifikationen des erfindungsgemäßen Verfahrens finden sich in den Unteransprüchen.

Das erfindungsgemäße Verfahren wird nachstehend anhand der Darstellung in den Zeichnungen näher beschrieben. Es zeigen
- Fig. 1: eine Geflügelkarkasse in axonometrischer Darstellung,

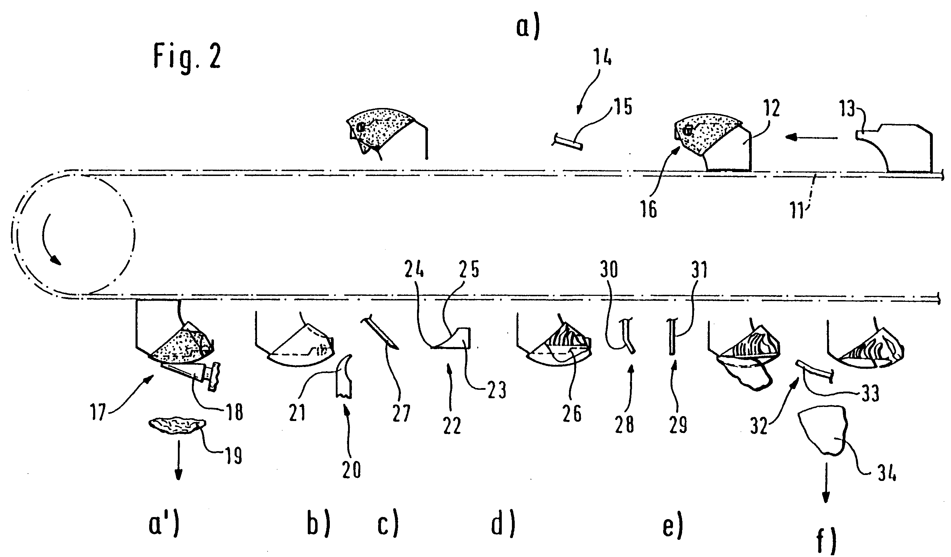

- Fig. 2: eine Seitenansicht einer Einrichtung zur Durchführung des erfindungsgemäßen Verfahrens schematisch dargestellt,

Zur Orientierung seien zunächst die anatomischen Gegebenheiten des Geflügelkörpers dargelegt, die bei der Durchführung des erfindungsgemäßen Bearbeitungsverfahrens eine Rolle spielen.

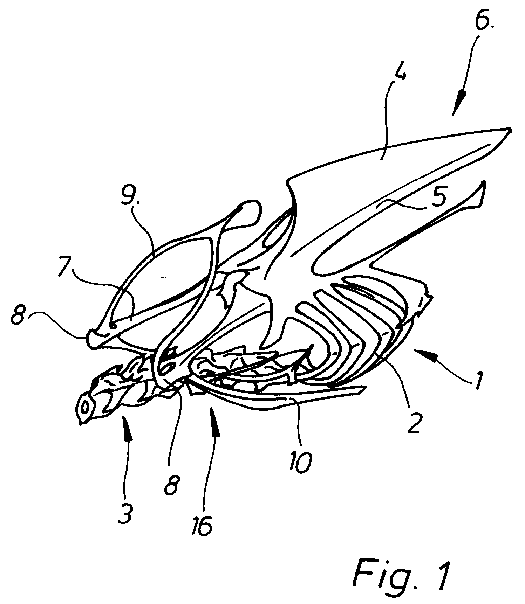

Diese Gegebenheiten beschränken sich auf den Teil des Geflügelkörpers, dessen Karkasse in Fig. 1 dargestellt ist. Dieser Teil des Geflügelkörpers wird fachlich als "front-half" bezeichnet und ist durch einen schräg durch den Körper verlaufenden Querschnitt entstanden, bei dem das Becken mit den Beinen abgetrennt wurde. In dem vorliegenden Falle wurden auch noch die Flügel entfernt, vorzugsweise durch Schnittführung durch den knochenfreien Zwischenraum zwischen dem Flügel-Körpergelenk und dem Oberarmknochen des Flügels.

Die Karkasse des zu bearbeitenden Teils des Geflügelkörpers umfaßt daher im wesentlichen den Brustkorb 1 (thorax) mit den Rippen 2 (costae), den diesen durchziehenden Teil der Wirbelsäule 3 (columna vertebralis) , das aus dem Brustbeinkamm 4 (crista sterni) und der Brustbeinplatte 5 (corpus sterni) bestehende Brustbein 6 (sterni) und die an diesem anschließenden Rabenbeine 7 (coracoidae) mit den Flügelgelenken 8 an ihren freien Enden, an denen einerseits das Gabelbein 9 (clavicula) und andererseits die Schulterblätter 10 (scapulae) ansetzen.

Zum Zwecke der Bearbeitung nach dem erfindungsgemäßen Verfahren wird ein solches "front-half" auf einen auf geeignete Weise umlaufend angetriebenen Förderer 11 aufgebracht.

Dieser ist in einem nicht gezeigten Gestell einer Bearbeitungsmaschine angeordnet und wird von einer Reihe von Werkzeugen flankiert, die die einzelnen Schritte des erfindungsgemäßen Verfahrens ausführen, und die zu diesem Zweck in geeigneter Weise gestaltet und synchron zu der Bewegung des Förderers 11 gesteuert werden. Die Werkzeuge sind jeweils paarweise zu beiden Seiten der Symmetrieebene der Fördersättel 12 angeordnet. Die Steuerung der Einzelwerkzeuge jedes Werkzeuges erfolgt so, daß die horizontalen Bewegungskomponenten jeweils synchron gegenläufig und die vertikalen jeweils gleichsinnig synchron erzeugt werden.

Der Förderer 11 weist eine endlos geführte Kette auf, die mit Fördersätteln 12 bestückt ist, die jeder ein vorausweisendes Sattelhorn 13 aufweisen.

Das Aufbringen des "front-half" auf einen Fördersattel 12 geschieht durch Aufstülpen so, daß das Sattelhorn 13 in den Brustkorb 1 eindringt und die Brustbeinplatte 5 von dem Sattelrücken getragen wird. Die Förderung erfolgt also unter Weisung des Halsendes der Wirbelsäule 3 in Förderrichtung und Ausrichtung der Brustpartie nach oben. Die Fixierung in Längsrichtung ergibt sich durch Anlage der Wirbelsäule 3 , welche Lage zweckmäßigerweise durch einen an dem Fördersattel 12 angeordneten, nicht gezeigten Klemmechanismus zusätzlich fixiert wird, um die Bearbeitungskräfte sicher aufzunehmen.

In der oben beschriebenen Weise vorbereitet gelangt der Geflügelkörper vorbewegt durch den Förderer 11 in den Arbeitsbereich des den Verfahrensschritt a) ausführenden Werkzeugen 14 . Es besteht aus einem Paar gegen die Förderrrichtung weisender Spreizfinger 15 , die unterhalb des Sattelhorns 13 im Bereich der Halsöffnung zwischen Haut und im Rückenbereich 16 aufliegendem Fleisch eindringen und die Haut durch seitliche Aussteuerung und konturgetreue Führung abheben. Dabei treten die Spitzen der Spreizfinger 15 schließlich im Bereich der Schnittebene aus, die das "front-half" erzeugt hat. Gleichzeitig werden die Spreizfinger 15 in eine Spreizstellung gesteuert, die letztlich bewirkt, daß die Hautbrücke an ihrer schwächsten Stelle über der Wirbelsäule 3 infolge Überdehnung reißt.

Mit derart partiell gelöster Haut gelangt der Geflügelkörper in den Untertrum des Förderers 11 und dort zunächst in den Arbeitsbereich des den Verfahrensschritt a') ausführenden Werkzeuges 17 . Dieses besteht aus einem Paar gegenläufig rotierender, verzahnter Kegelwalzen 18 , die die Haut 19 zwischen sich einziehen und dank der Vorarbeit des Werkzeuges 14 ganzstückig abziehen.

Der enthäutete Geflügelkörper tritt anschließend in den Arbeitsbereich des den Verfahrensschritt b) ausführenden Werkzeuges 20 ein. Es besteht aus einem Paar Messerklingen 21 , die im Bereich der Flügelgelenke 8 beginnend an der Außenkontur des Gabelbeins 9 entlanggeführt werden und dieses aus dem Fleisch herauslösen.

Der folgende Verfahrensschritt c) wird durch ein Paar Messerklingen 27 ausgeführt, die die im Bereich der Flügelgelenke 8 aufliegenden Fleischteile lösen, zu welchem Zweck die Messerklingen kurzzeitig eingesteuert werden.

Der nächste Verfahrensschritt d) wird durch das Werkzeug 22 ausgeführt. Es besteht aus einem Paar der Wölbung des Geflügelkörpers durch konkave Profilierung angepaßter Schabeklingen 23 , die jede mit einer gegen die Förderrichtung weisenden Spitze 24 und daran anschließender, pflugartig zurückweichender Schabekante 25 versehen sind. Die Anordnung der Schabeklingen 23 ist so getroffen, daß sie in der Grundstellung mit ihren Spitzen 24 unmittelbar unterhalb der Flügelgelenke 8 und in der Ebene der Außenflanke der dort ansetzenden und sich längs der Wirbelsäule 3 erstreckenden Schulterblätter 10 in das Fleisch eintauchen. Die Schabeklingen 23 werden dann so gesteuert, daß sie an den Schulterblättern 10 entlanggleiten und dabei die Fleischpartien lösen, die auf den dort befindlichen, an der Wirbelsäule 3 anschließenden Teilen der Rippen 2 aufliegen.

Nach diesem Verfahrensschritt sind die im Rückenbereich befindlichen Fleischteile 26 von der Karkasse gelöst und hängen durch Wirkung der Schwerkraft an den Flanken des Geflügelkörpers herab.

So vorbereitet gelangt der Geflügelkörper nunmehr in den Arbeitsbereich des bzw. der den Verfahrensschritt e) ausführenden Werkzeuge 28 bzw. 29 . Diese bestehen jeweils aus Paaren von Schabefingern 30 bzw. 31 , die zunächst die Fleischteile, die auf den Rabenbeinen 7 und den noch bedeckten Teilen der Rippen 2 aufliegen und dann die auf der Brustbeinplatte 5 befindlichen abheben.

Damit ist das Fleisch von der Karkasse soweit gelöst, daß es lediglich noch an dem Kamm 4 des Brustbeins 6 haftet. Diese Verbindung wird mit dem Verfahrensschritt f) getrennt, wozu ein aus einem Paar Schabefinger 33 bestehendes Werkzeug 32 zum Einsatz kommt.

Während das gewonnene Fleischteil als Doppelfilet 34 abfällt, wird die Karkasse in geeigneter Weise von dem Fördersattel 12 abgeworfen, so daß ein neuer Zyklus aufgenommen werden kann.

Das erfindungsgemäße Verfahren stellt auch insofern eine hohe Ausbeute und Qualität des Produktes sicher, als der gewählten Reihenfolge der Verfahrensschritte jeweils das Ziel zugrundeliegt, die sich mit fortschreitender Bearbeitung einstellende Minderung der Stabilität der Karkasse so zu steuern, daß die jeweils folgendenden Arbeitsschritte in geringstmöglicher Weise beeinträchtigt werden.

## Patentansprüche

1. Verfahren zum maschinellen Ablösen des Fleisches von den Körpern geschlachteten Geflügels in Filetform, wobei das entsprechend zu handhabende Ausgangsprodukt einen als "front-half" bezeichneten, d. h. einen durch einen schräg durch den Körper verlaufenden, das Becken mit den Beinen abtrennenden Querschnitt entstandenen Körperteil umfaßt, von dem jedoch die Flügel entfernt sind, der also im wesentlichen den Brustkorb (thorax), den entsprechenden Teil der Wirbelsäule (columna vertebralis), die Rippen (costae), das aus dem Brustbeinkamm (crista sterni) und der Brustbeinplatte (corpus sterni) bestehende Brustbein (sternum), die von diesem getragenen Rabenbeine (coracoidae) mit den Flügelgelenken und dem Gabelbein (clavicula), sowie die Schulterblätter (scapulae) umfaßt, und wobei dieser Körperteil unter Aufstülpen mit den Flügelgelenken voraus und parallel zu seiner Symmetrieebene gefördert wird, **gekennzeichnet durch** die Verfahrensschritte
a) Ablösen der den Rückenbereich überspannenden Haut von dem dort befindlichen Rückenfleisch und Auftrennen derselben im Bereich der Wirbelsäule (3) ,
b) Lösen des Fleisches von dem Gabelbein (9) durch Schaben längs der Außenkontur desselben,
c) Ablösen der auf dem vorauslaufenden Teil des Flügelgelenkes (8) aufliegenden Fleischteile,
d) Lösen der im Rückenbereich auf den Rippen (2) aufliegenden Fleischteile von den dort befindlichen Teilen der Rippen (2) und den Schulterblättern (10),
e) Lösen der auf den Rabenbeinen (7) , den übrigen Teilen der Rippen (2) und der Brustbeinplatte (5) aufliegenden Fleischteile von diesen Skeletteilen, und schließlich
f) Abreißen der Filets von dem Kamm (4) des Brustbeins (6), wobei die einzelnen Schritte jeweils durch mindestens ein Werkzeug durchgeführt werden.

2. Verfahren nach Anspruch 1, **dadurch gekennzeichnet**, daß zwischen den Verfahrensschritten a) und b) ein Verfahrensschritt a') eingeschoben ist, der das Entfernen der gesamten Haut umfaßt, wobei dieser Verfahrensschritt durch Erfassen der Haut im Bereich des Kammes (4) des Brustbeins (6) ausgeführt wird

3. Verfahren nach den Ansprüchen 1 oder 2, **dadurch gekennzeichnet**, daß die Bearbeitungslage der Geflügelkörper während der Durchführung der Verfahrensschritte a') bis f) so gewählt ist, daß das Abheben der jeweils abgelösten Fleischteile durch die Schwerkraft unterstützt wird.

## Claims

1. Process for the mechanical detachment of flesh in fillet form flesh from the carcasses of slaughtered poultry, wherein the corresponding starting product to be handled comprises a body part designated as "front half", i.e. created by a cross-cut running obliquely through the body and separating the pelvis with the legs, from which however the wings are removed, which thus substantially comprises the thoracic cage (thorax), the corresponding part of the backbone (columna vertebralis), the ribs (costae), the breastbone (sternum) consisting of the breastbone comb (crista sterni) and the breastbone plate (corpus sterni), the raven bones (coracoidae) carried by this with the wing joints and the wishbone (clavicula), as well as the shoulderblades (scapulae), and wherein this body part is conveyed parallel to its plane of symmetry and turned up with the wing joints forward, characterised by the process steps
a) detachment of the skin spanning the back region from the back flesh disposed there and severing of the same in the region of the backbone (3),
b) loosening of the flesh from the wishbone (9) by scraping along the outer contour thereof,
c) detachment of the flesh parts lying on the leading part of the wing joint (8),
d) loosening of the flesh parts lying on the ribs (2) in the back region from the parts of the ribs (2) disposed there and the shoulderblades (10),
e) loosening of the flesh parts, which lie on the raven bones (7), the remaining parts of the ribs (2) and the breastbone plate (5), from these skeleton parts, and finally
f) tearing off of the fillets from the comb (4) of the breastbone (6),
wherein the individual steps are each performed by at least one tool.

2. Process accoridng to claim 1, characterised thereby that inserted between the process steps a) and b) is a process step a') which comprises the removal of the entire skin, wherein this process step is carried out by gripping of the skin in the region of the comb (4) of the breastbone (6).

3. Process according to claims 1 and 2, characterised thereby that the processing position of the poultry carcasses during the performance of the process steps a') to f) is so selected that the lifting off of the flesh parts detached each time is assisted by gravity.

## Revendications

1. Procédé destiné à détacher à la machine, des corps de volailles abattues, la chair en forme de filets, le produit initial à manipuler comprenant l'élément de corps appelé "front-half", ou moitié avant, c'est-à-dire une partie qui résulte d'une coupe transversale de tracé oblique à travers le corps, séparant le bassin avec les pattes, mais dont les ailes sont cependant enlevées, qui comprend donc sensiblement la cage thoracique (thorax), la partie correspondante de la colonne vertébrale (columna vertebralis), les côtes (costae), le sternum (sternum) qui se compose de la partie haute ou manubrium (crista sterni) et du corps de sternum (corpus sterni), les coracoïdes (coracoidae) portés par celui-ci avec des articulations d'ailes et la clavicule (clavicula), ainsi que les omoplates (scapulae), cette partie de corps étant entraînée en étant redressée, les articulations d'ailes en avant, et parallèlement à son plan de symétrie, **caractérisé par** les étapes consistant à :
a) Détacher, de la chair du dos qui s'y trouve, la peau qui recouvre la zone du dos et enlever cette peau dans la zone de la colonne vertébrale (3),
b. détacher de la clavicule la chair, en raclant la clavicule le long de son contour extérieur,
c. détacher les éléments de chair qui reposent sur la partie située en avant de l'articulation d'aile (8),
d. détacher, des éléments des cotes (2) qui s'y trouvent et des omoplates (10), les éléments de chair qui reposent sur les cotes (2) dans la zone du dos,
e. détacher des éléments de squelettes correspondants les parties de chair reposant sur les coracoïdes (7), les autres éléments des cotes (2) et le corps de sternum (5), et finalement
f. arracher les filets de la partie haute (4) du sternum (6),
les étapes individuelles étant respectivement mises en oeuvre à l'aide d'au moins un outil.

2. Procédé selon le revendication 1, **caractérisé en ce** **que** il est inséré, entre les étapes de procédé a) et b), une étape de procédé a') qui comprend l'enlèvement de toute la peau, cette étape de procédé étant exécutée en saisissant la peau dans la zone de la partie haute (4) du sternum (6).

3. Procédé selon la revendication 1 ou 2, caractérisée en ce **que** la position de traitement des corps de volaille dans l'exécution des étapes a') à f) de procédé est choisie d'une manière telle que l'enlèvement des parties de chair respectivement détachées est facilité par la pesanteur.
